Europäisches Patentamt

European Patent Office

Office européen des brevets

(11) Publication number: **0 269 213** –

**A2**

# (12) EUROPEAN PATENT APPLICATION

(21) Application number: 87308261.4

(51) Int. Cl.4: **D01D 7/00** , D01D 5/24

(22) Date of filing: **18.09.87**

(30) Priority: **19.09.86 US 909735**

(43) Date of publication of application:
**01.06.88 Bulletin 88/22**

(84) Designated Contracting States:
**AT BE CH DE FR GB IT LI LU NL SE**

(71) Applicant: **CELANESE CORPORATION
1211 Avenue of the Americas
New York New York 10036(US)**

(72) Inventor: **Siep, Joan M.
10227 Hanover Woods Place
Charlotte N. Carolina(US)**
Inventor: **Penegar, Robert H.
Route 11, Box 188
Lancaster South Carolina(US)**
Inventor: **Ulbrich, Jeffrey L.
3008 Shallwood Lane
Matthews North Carolina(US)**

(74) Representative: **De Minvielle-Devaux, Ian
Benedict Peter et al
CARPMAELS & RANSFORD 43, Bloomsbury
Square
London WC1A 2RA(GB)**

(54) **Method and apparatus for forming a package of plural separable fibers, and the package of fibers thus formed.**

(57) A method and apparatus for forming a package comprising plural fibers, particularly hollow fiber membranes, and the product package thus formed. Plural fibers are laterally spatially segregated into at least two groupings each of which consists of multiple fibers and are maintained in their laterally spaced groupings during processing. Winding of the groupings upon a spool is accomplished such that the laterally spaced segregation of the groupings is preserved during traversal of the groupings of fibers from one end of the spool to the other end and each fiber of the grouping for each successive layer wound upon the spool is caused to be wound in substantial parallel alignment with respect to those fibers of an immediately preceding layer. During traversal, the fiber groupings are permitted by means of guide structures to be laterally slidably displaced axially parallel the winding axis of the spool. In such a manner, fiber-to-fiber interaction is minimized whereby upon unwinding from the package, each fiber is readily separable from the other fibers of its respective grouping without damage thereto.

EP 0 269 213 A2

# METHOD AND APPARATUS FOR FORMING A PACKAGE OF PLURAL SEPARABLE FIBERS, AND THE PACKAGE OF FIBERS THUS FORMED

## FIELD OF INVENTION

The present invention generally relates to the field of wound packages of plural fibers and, more particularly, packages having plural hollow fiber membranes, in which the individual fibers of the package are readily separable one from another upon unwinding

## SUMMARY OF THE INVENTION

Hollow fiber membranes, particularly microporous fibers, are achieving wide spread uses in various applications owing to the fibers' larger surface area per unit volume as compared to a flat film of similar porous configuration. For example, hollow fiber membranes are utilized in blood oxygenators (U. S. Patent No. 4,020,230) in cell culture reactors (U. S. Patent No. 4,201,845), and in modules used in various separatory processes (U. S. Patent Nos. 3,422,008, 4,045,851, 4,351,092, 4,105,548 and 4,201,845). When used as a blood oxygenator, a bundle of several thousand hollow porous fibers of suitable length are fashioned into an oxygenator unit. During manufacture of the oxygenator units, it is necessary for the hollow porous fibers to be unwound from a product package so that they may then be further formed into the required bundles.

Conventionally, hollow fiber membranes are supplied to manufacturers of devices which utilize the same in spool form, each spool having multiple fibers (or ends) wound thereupon. For example, product packages consisting of six microporous hollow polypropylene fiber membranes wound thereupon have been commercially sold more than one year prior to the date of this application.

A problem exists however that during the manufacture of hollow fiber membrane devices, it is desirable for the device manufacturer to individually separate the multiple fibers during unwinding of the supply spool so that the individual fibers can be further fashioned into the form of bundles, modules, wrappings and the like which are required for the devices. Separation of hollow fiber membranes simultaneously during unwinding of the fibers from a product package would permit device manufacturers to more readily fabricate high efficiency devices (i.e., devices having greater exposure of membrane surface area).

Hollow fiber membranes are, however, rather fragile in nature and any fiber entanglement during unwinding and/or excess mechanical abrasion may damage the fibers to an extent that they may no longer be capable of satisfactorily performing their function in the devices in which they are used or may cause the fibers to break during the unwinding procedure. Fiber breakage during unwinding is not only disadvantageous from the standpoint of fiber integrity, but also results in down time for the device manufacturer which would contribute to less economical production of devices employing the fibers. Accordingly, a package comprising plural hollow fiber membranes wound thereupon has been needed in which the individual fibers are capable of readily separating one from another upon being unwound from the package without being damaged. Such a need has been satisfied by means of the present invention.

One aspect of this invention relates to a method of forming a package having a plurality of fibers wound in a cylindrically-shaped form which fibers are capable of readily separating from one another upon being unwound from the package. The method includes the steps of segregating the plural fibers into at least two groupings each of which consists of multiple fibers in side-by-side, uncrossed relationship, and winding the fiber groupings onto a spool by causing the fiber groupings to be traversed between ends of the spool. The segregation of the fiber groupings and the side-by-side uncrossed relationship of the fibers in each grouping are maintained during traversal of the groupings between the ends of the spool. Each of the fibers of the fiber groupings are caused to be wound in a substantially aligned parallel manner to those fibers of an immediately preceeding winding layer. During traversal, the fiber groupings are permitted to be slidably displaced parallel to the winding axis of the spool along respective smoothly curved surfaces prior to the groupings being wound upon the spool. The method is particularly suitable for use in the continuous production of melt-spun hollow fiber membranes, particularly, microporous hollow fiber membranes, by the sequential cold and hot stretching techniques exemplified in U. S. Patent Nos. 4,405,688 and 4,541,981, each being expressly incorporated hereinto by reference.

A further aspect of the present invention relates to apparatus for forming a package having a plurality of fibers so that each fiber is readily separable one from another upon being unwound from the formed package. The apparatus includes winding apparatus having a spindle for carrying a spool and for rotating the spool about a winding axis to cause the plural fibers to be wound upon the spool. A traversing mechanism engagable with the plural fibers reciprocally traverses a path parallel to the winding axis during winding by the winding mechanism so that the plural fibers are wound upon the spool between its ends. Guide structures guide the plural fibers to the traversing mechanism and define at least one smoothly curved surface disposed parallel to the winding axis. A partition divides the smoothly curved surface into at least two subsurfaces for segregating the plural fibers into at least two fiber groupings, each of which consists of multiple fibers in side-by-side uncrossed relationship, each fiber grouping being in sliding contact with a respective one of the subsurfaces. The guide structures thus allow the fiber groupings to be axially slidably displaced along their respective subsurface in response to the traverse mechanism traversing its path to thereby preserve the segregation of the groupings when the groupings are wound upon the spool. In such a manner, fiber-to-fiber interactions are minimized such that each fiber is readily separable from the other fibers of its respective grouping upon being unwound from the spool.

The package thus formed according to the present invention includes a cylindrical spool and a plurality of continuous hollow porous fibers wound thereupon about the axis of the spool in generally successive winding layers between opposing ends of the spool. Each layer of fibers is comprised of repeating units of several laterally spaced-apart groupings of fibers, each grouping consisting of multiple fibers in side-by-side, uncrossed relationship to one another. Each lateral edge portion of the winding layers adjacent to respective ends of the spool consists of those fibers in side-by-side uncrossed relationship which form that one grouping of fibers nearest to the respective end to the spool during winding. The lateral spatial segregation of one grouping relative to another grouping insures that upon unwinding, the force of unwinding will cause the individual fibers to be readily separable from one another without damage.

These as well as other advantages of the present invention will become more clear after consideration is given to the detailed description of the preferred exemplary embodiments thereof which follow.

## BRIEF DESCRIPTION OF THE ACCOMPANYING DRAWINGS

Reference will hereinafter be made to the accompanying drawings wherein like reference numerals throughout the various Figures denote like structural elements and wherein:

Figure 1 is a schematic elevational view of processing apparatus which may be employed in the practice of the present invention;

Figure 2 is a detailed schematic elevational view of the winding section of the apparatus depicted in Figure 1;

Figure 3 is a rear elevational view taken along line 3-3 in Figure 2;

Figure 4 is a detailed elevational view of a preferred guide roll employed in the practice of this invention;

Figures 5a-5c depict various conditions during winding of the fibers upon the spool;

Figure 6 is a perspective view of a package of hollow porous fibers of the present invention (shown in a partially unwound state for discussion purposes); and

Figure 7 is a graph showing linear feet of fiber unwound before breakage versus unwinding speed for packages of this invention and of the prior art.

## DETAILED DESCRIPTION OF THE PREFERRED EXEMPLARY EMBODIMENTS

The present invention may utilize any fiber which is desired to be separated from other fibers upon being unwound from a package containing a plurality of such fibers. Particularly, the invention is useful when the fibers are hollow fiber membranes. As used herein and in the accompanying claims, the term "membrane" is meant to refer to an interphase which restricts transport of chemical species and may be homogeneous or heterogeneous, symmetric or asymmetric. The hollow fiber membranes may be formed of suitable polymeric materials such as, for example, polyolefins, polyamides, polysulfones, cellulosic compounds including cellulose esters, cellulose acetate and regenerated cellulose, silicone rubber, polyvinyl chloride, polycarbonate, polytetrafluoroethylene, polyhydroxyethylmethacrylate, polyacylonitrile, and polyurethane. Membrane fibers may also be formed of metal oxides, graphite, glass and metals.

Although the present invention may be applicable to various fibers, its utility is especially evident when the fibers are hollow microporous polyolefinic fiber membranes as described in commonly-owned U.S. Patent Nos. 4,405,688 and 4,541,981. Such microporous polyolefinic hollow fiber membranes will preferably have an average wall thickness in the range of from about 1 to about 75 microns, a coefficient of variation in wall thickness throughout a cross section taken perpendicular to the axis of the fibers of less than about 20%, an average inner diameter in the range of from about 5 to about 1500 microns, a coefficient of variation in inner diameter throughout a cross-section taken perpendicular to the axis of the fiber of less than about 8%, and a substantially uniform porosity across the circumference of the fiber as measured by the average ratio of the maximum pore density to the minimum pore density around the circumference of the fiber of less than about 3:1. Such preferred microporous polyolefinic hollow fiber membranes have structural uniformity characterized by coefficient of variation of wall thickness of less than 10%, a coefficient of variation in inner diameter of less than 5%, and an average ratio of maximum pore density to minimum pore density around the circumference of the fiber of less than about 2:1. The preferred microporous polyolefinic hollow fiber membranes will have a transfer rate, as measured by an oxygen flux, of at least about 10, preferably in the range of from about 30 to about 300, and most preferably in the range of from about 100 to about 300 cc/cc$^2$. min. at 10 psig. In applications where oxygen flux and porosity are not as important, the oxygen flux may be as low as 1 cc/cc$^2$. min at 10 psig.

The preferred microporous polyolefinic hollow fiber membranes are prepared by melt spinning nonporous hollow precursor fibers in a substantially vertically upward direction at a temperature of from about 10° to about 90° C. above the crystalline melting point of the polymer and then spin-orienting the precursor fibers while subjecting the precursor fibers to a symmetrical quenching step using a hollow annular structure surrounding the precursor fibers which has one or more openings on its inner surface that distribute the quenching medium against the precursor in a substantially uniform manner. Following the spin orienting and quenching of the precursor, the hollow nonporous precursor fiber is converted into a microporous hollow fiber by stretching and heat setting of the fiber. The precursor fiber may also optionally be annealed prior to stretching in which case the hollow precursor fibers are subjected to a heat treatment or annealing step in which the amount of crystallinity and/or the crystal structure is improved. Generally, annealing may be conducted at a temperature of from 5° to 100° C. below the crystalline melting point of the polyolefinic resin for a period of at least about 0.5 seconds but can vary from about 130° to about 145° C. for a period of about 30 minutes.

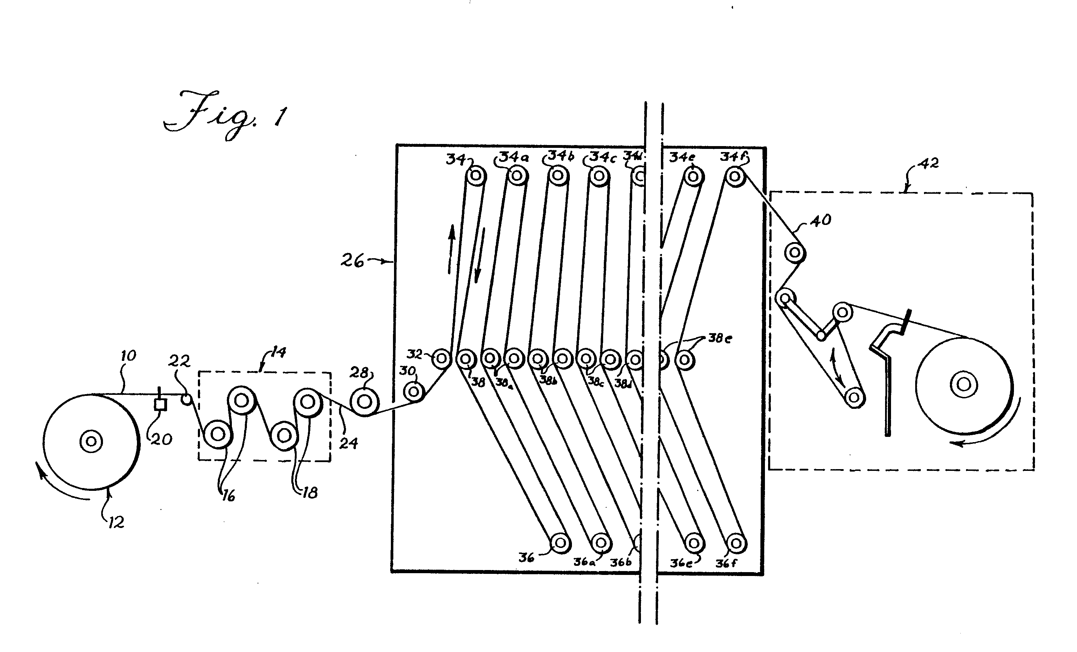

A further understanding of the present invention may be seen by referring to accompanying Figure 1 which shows an embodiment of this invention used in the continuous production of hollow fiber membranes discussed above. As is seen, nonporous precursor fibers 10 which may have been optionally annealed by means not shown are unrolled from a supply roll 12 into a cold stretching zone generally denoted by reference numeral 14. Cold stretching zone 14 generally includes two pairs of skewed rolls 16, 18 which are driven at suitable peripheral speeds by drive means (not shown) to achieve the desired degree of cold stretch. Although a single monofilament fiber 10 is depicted in Figure 1 as being unrolled from supply roll 12 for purposes of discussion, the reader should appreciate that multiple fibers, preferably six or more continuous monofilament nonporous precursor fibers, are simultaneously unrolled and treated according to this invention. Prior to being subjected to the cold stretch zone 14, the multiple fibers are segregated into at least two groupings of fibers by means of a separating comb 20, each grouping containing, for example, two to four fibers. The thus segregated fiber groupings are then fed over idler roll 22 and then on to cold stretch zone 14.

The cold stretched fibers (now denoted by reference numeral 24) are guided into hot stretching means 26 over one or more idler rolls 28. Hot stretching means 26 preferably includes a single set of skewed rolls, 30, 32 and a plurality of additional multiple hot stretching rolls disposed in an oven in a festoon configuration. The skewed rolls 30, 32 help maintain tensioning of the cold stretched fibers by means of their rotating at controlled peripheral speeds. The tensioned and cold stretched fibers 24 are then conveyed onto a first hot stretch roll 34 and are hot stretched for the first time between hot stretching roll 34 and tensioning roll 32 due to hot stretching roll 34 being rotated at a peripheral speed which exceeds the peripheral speed imparted to the fibers by means of tensioning roll 32.

The hot stretching procedure continues for an many discreet steps as may be preferred. For example, the fibers are stretched for a second time between the first hot stretch roll 34 and second hot stretch roll 36 by rotating the second hot stretch roll 36, the latter being rotated at a peripheral speed greater than the peripheral speed of roll 34. In order to minimize the unsupported fiber length, at least one idler roll 38 may optionally be disposed between the first and second hot stretch rolls 34, 36 respectively. Hot stretching may then continue in a plurality of discreet hot stretching steps via roll pairs 34a-34f and 36a-36f with idler rolls 38a-38e being optionally interposed therebetween to minimize the unsupported length as was similar with idler roll 38 discussed previously. Upon exiting hot stretch means 26, the hollow microporous fiber membranes (now denoted by reference numeral 40) are transported to winding section 42.

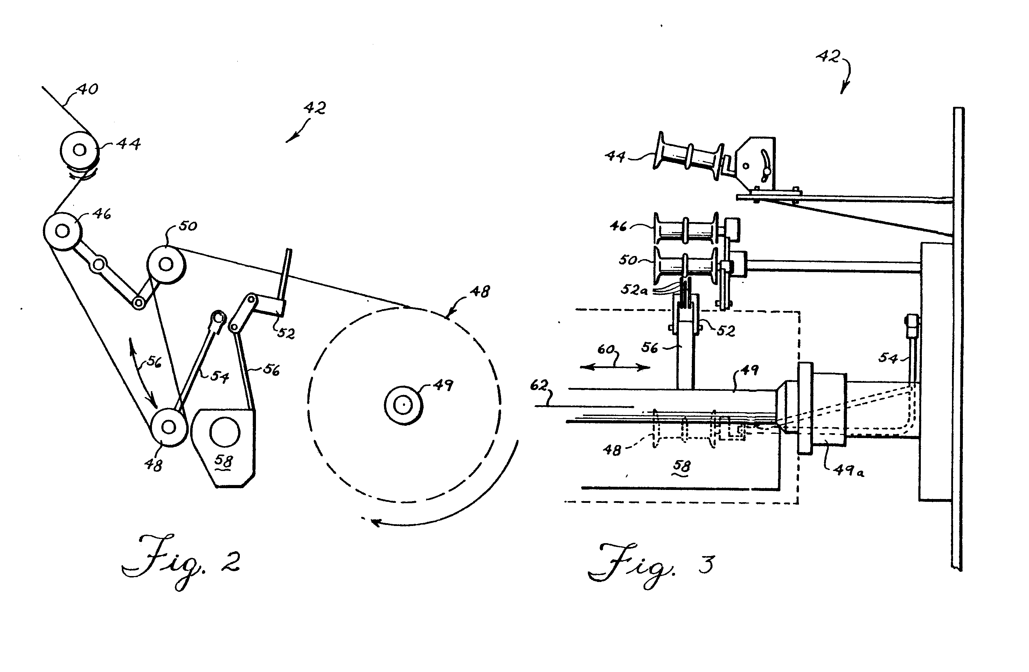

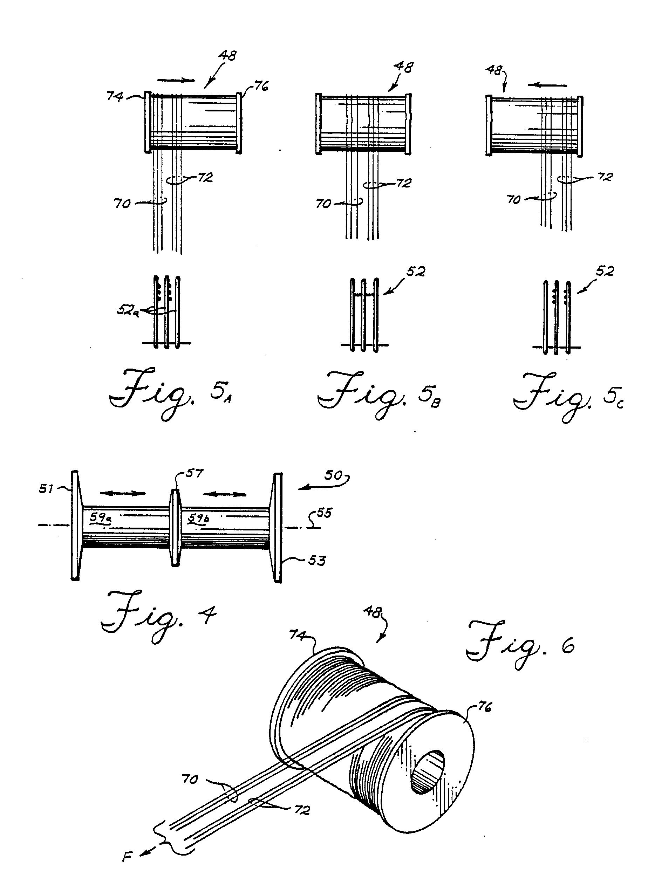

The structural components comprising winding section 42 may be more clearly seen by referring to accompanying Figures 2 and 3. As is seen, the microporous fibers 40 enter the winding section 42 and are initially passed over idler rolls 44, 46 which serve to parallelize the fibers with respect to one another and with respect to the product package generally noted by reference numeral 48. Product package 48 is formed upon a cylindrical, flanged spool (see Figure 6) which is mounted upon spindle 49 for rotational movement about the spindle's axis 62 by means of rotating mechanism 49a. The microporous fibers then pass around a second pair of idler rolls 48, 50 through comb guide 52 and then on to product package 48 whereby the fibers 40 are wound upon a spool (not shown in Figures 2 and 3). Tension sensing roll 48 is mounted to speed compensator arm 54 so as to be capable of pivoting (arrow 56) in response to changes in the tension of fibers 40. Pivoting of arm 54 is sensed by means not shown but well known in the art so as to controllably vary the winding speed of spindle 49 and thus controllably maintain substantially constant tension upon fibers 40 during the winding operation.

Comb 52 includes a plurality of upstanding tines 52a (see Figure 3) which respectively define open regions each of which accepts one of the fiber groupings, which in the case under discussion happens to be two fiber groupings. However, as was mentioned previously, as many fiber groupings each of which contains plural fibers (preferably 2 to 4) may be practiced according to this invention. Comb 52 is supported by a traversing arm 56 which is connected to a traversing mechanism 58. Traversing mechanism 58 during operation causes arm 56 to traverse a path (arrow 60) parallel to the winding axis 62 of spindle 49 and thus, together with the winding of package 48 causes the groupings of fibers to be wound between the end flanges of the spool upon which package 48 is formed.

The guide spools 44, 46, 48 and 50 are an important part of the present invention and will now be described by reference to Figure 4. Figure 4 shows spool 50 for purposes of illustration as being representative of spools 44, 46, and 48. As is seen, spool 50 includes a pair of end flanges 51 and 53 spaced apart along the axis 55 of spool 50. A partition flange 57 is provided intermediate end flanges 51 and 53 so as to establish therebetween respective smoothly curved cylindrical subsurfaces 59a, 59b. Preferably, spool 50 is mounted so as to be rotatable about its longitudinal axis 55 and such that axis 55 is generally parallel to winding axis 62. However, stationary convexly curved smooth surfaces may also be utilized if desired. The subsurfaces 59a, 59b serve to provide respective contact surfaces for the two groupings of fibers. The subsurfaces 59a, 59b of spool 50 should also be smooth so that the fiber groupings can be slidably displaced laterally between end flanges 51 and 53 and partition flange 57, respectively, as is noted by the arrows in Figure 4.

While not wishing to be bound by any particular theory, it is suspected that by permitting the fiber groupings to be laterally slidably displaced along the respective subsurfaces of spools 44, 46, 48 and 50 and by maintaining the fibers in a separated relationship by means of the partition flanges thereon, fiber-to-fiber interaction and false twisting of the fibers during the winding operation will be minimized. Such minimization of fiber-to-fiber interaction and false twisting in the individual fibers is believed therefore to permit the fibers to be readily separable one from another upon unwinding from the package 48. Lateral sliding displacement permitted along the subsurfaces of spools 44, 46, 48 and 50 will also minimize deflection or the break angle of the fibers as they encounter comb 52 when the latter traverses between the ends of the product package spool thereby insuring that the fibers are maintained in their segregated groupings and are wound upon the product package 48 in a substantially parallel aligned, uncrossed relationship which also is believed to promote ease of fiber separation upon unwinding.

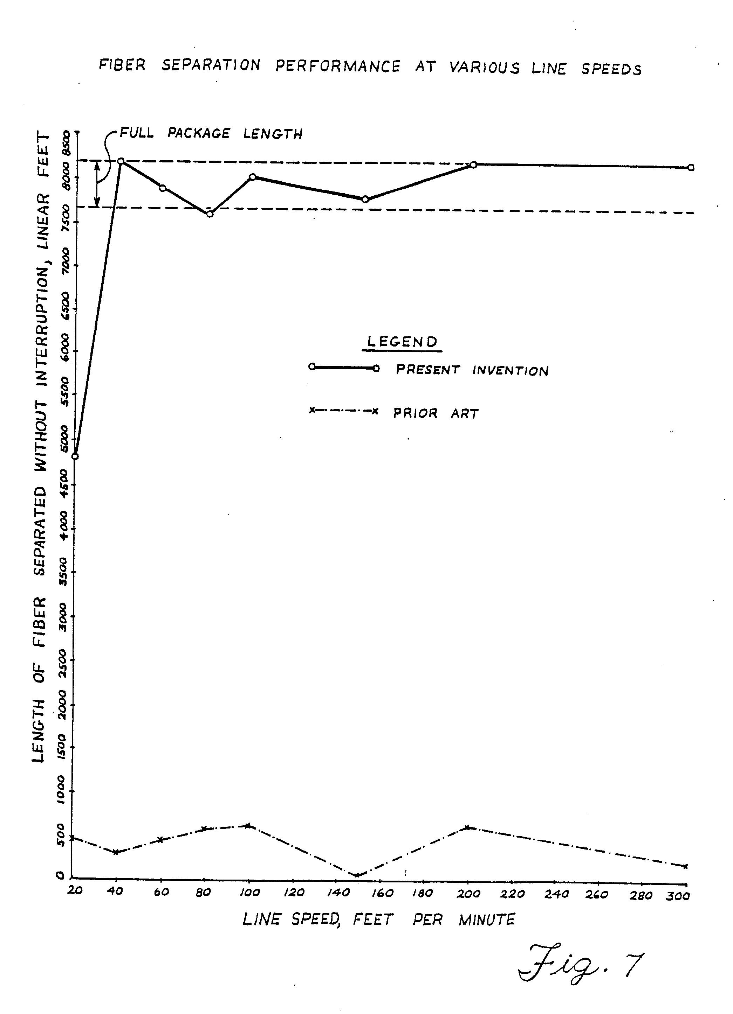

Figures 5a-5c show the winding of the fibers in greatly enlarged schematic fashion for purposes of clarity. Figure 5a depicts that state of the winding operation whereby the laterally spaced-apart fiber groupings (noted by reference numerals 70, 72) are beginning their traverse in a direction from the left side spool flange 74 towards the right side spool flange 76 as viewed in Figures 5a-5c. At that time, the fiber groupings 70, 72 are caused to be in contact with the trailing pair of tines 52a of comb 52. The fibers in groupings 70, 72 will upon reaching package 48 again assume a horizontal side-by-side, uncrossed parallel alignment and, moreover, the fibers in grouping 70 will be laterally spatially segregated from those fibers of grouping 72. In such a manner, the fibers of groupings 70 and 72 will be wound upon product package 48 between end flanges 74, 76 in substantial parallel alignment with respect to previously wound fibers. Moreover, at the lateral edge portion of package 48 adjacent to spool flange 74, only these fibers of fiber grouping 70 will be present in a side-by-side, uncrossed relationship --that is to say, those fibers of grouping 72 will not be placed over to be crossed with those fibers of grouping 70. The fibers of groupings 70, 72 will be laterally slidably displaced parallel to the axis of e.g., spool 50 (see Figure 4) along the smoothly curved cylindrical subsurfaces 59a, 59b, respectively, in response to the traversing movements of comb 52. Upon reaching generally the central location of product package 48, the fiber groupings 70, 72 will assume substantially horizontal side-by-side relationship in the open regions defined between the respective tines 52a of comb 52. Such a condition is shown in Figure 5b. When the traverse mechanism 58 causes comb 52 to reach the opposite lateralmost position with respect to package 48 such that the traverse direction is reversed, the fibers will contact the then trailing paid of tines 52a as can be seen in Figure 5c. As was the case with regard to the lateral edge adjacent spool flange 74 as discussed with reference to Figure 5a, the lateral edge of package 48 adjacent the spool flange 76 consists of only those fibers of grouping 72 and, in a like manner, those fibers of grouping 70 do not cross or otherwise entangle with the fibers of grouping 72. The procedure described with reference to Figures 5a-5c continues until a desired length of each fiber in grouping 70 and 72 (typically greater than 7,500 linear feet) is wound upon the spool between spool end flanges 74, 76 so as to form package 48. The package 48 thus formed is schematically depicted in Figure 6.

As can be seen in Figure 6, the groupings of fibers 70, 72 are shown as being wound upon the spool between spool end flanges 74, 76 as was previously described. Figure 6 also shows the fiber groupings 70, 72 in a state of unwinding for purposes of the following discussion. During unwinding (typically at unwinding speeds of between 200 to 400 feet per minute); a tension force "F" is applied to the fibers in grouping 70, 72. Tension force F is chosen so as to enable relatively high unwinding rates (e.g., 200 to 400 feet per minute) to be achieved while at the same time not causing sufficiently high tension to be experienced by the individual fibers of groupings 70, 72 which may damage them. The tension force "F" is a function of fiber diameter and weight per unit length of the fiber. For example, when 400μm nominal i.d. Celgard® hollow fiber is utilized, the tension force "F" is typically about 100 grams at unwinding rates of between 200 to 400 feet per minute. As will be seen in the following examples, the multiple fibers of a product package of this invention are readily separable one from another during unwinding as compared to a previously sold multiple fiber package.

. The present invention will be further illustrated by way of the following examples, the specifics of which should be considered nonlimiting and exemplary of the invention.

## EXAMPLE I

To examine the efficacy of the separability of the multifilament product packages of this invention upon unwinding, a series of runs were conducted at an unwinding test station. The test station included a creel upon which the product packages were mounted and a speedcontrollable winder. Each monofilament fiber of the package was placed within a respective space defined between adjacent tines of a comb guide which was positioned about 4.5 feet downstream of the creel. Each monofilament fiber was then passed to a takeoff roll which maintained substantially constant tension upon the fibers during unwinding, and then finally onto the winder. During unwinding a substantially constant fiber tension of about 100 grams per six filaments was maintained between the creel and the takeoff roll.

The hollow fiber membranes used in this example were Celgard® hollow 400μm nominal i.d. microporous polypropylene fibers commercially available from Celanese Separations Products, Charlotte, North Carolina and were produced substantially in accordance with the teachings of U. S. Patent Nos. 4,405,688 and 4,541,981. The hollow fibers were wound upon a spool utilizing the apparatus shown in accompanying Figures 2 and 3. Each product package consisted of two fiber groupings, each grouping consisting of three fibers with a total length of fiber wound upon the spool being in the range of about 7,767 to about 8,185 linear feet.

The product packages were unwound from the creel at substantially constant takeoff speeds and the elapsed time of unwinding until fiber breakage or until the fibers were completely unwound from the spool was observed. The results are shown in Table 1 below:

## TABLE 1

| Run No. | Unwinding Speed (fpm) | Run time (minutes) | Length unwound (feet) |
|---------|-----------------------|--------------------|-----------------------|
| 1 | 20 | 240:00* | 4800 |
| 2 | 40 | 204:37** | 8185 |
| 3 | 60 | 130:35** | 7835 |
| 4 | 80 | 94:98* | 7584 |
| 5 | 100 | 79:59** | 7998 |
| 6 | 150 | 51:47** | 7768 |
| 7 | 200 | 40:54** | 8180 |
| 8 | 300 | 27:17** | 8185 |

\* Time to fiber breakage
\*\* Time to complete unwinding of product package

As would be expected, the run time decreased as the unwinding speed increased. With the exception of run nos. 1 and 4, each product package in accordance with the teachings of this invention completely unwound without fiber breakage. The breakage of certain fibers during run number 1 and 4 however was attributable to the unwinding test station's inability to maintain substantially constant side-to-side tension on the individual fibers. That is, nonuniformity of tension between the two groups of fibers allowed one of the groups to sag which resulted in certain fibers of that group becoming snagged in the comb guide. During commercial unwinding operations, such side-to-side tension nonuniformity would not be present in that a festoon arrangement or other tension control means would probably be employed to assist in maintaining substantially constant tension on the individual fibers. Owing to the relative fragility of hollow fiber membranes, the fact that multiple fibers can be unwound at speeds in excess of 200 fpm without breakage as demonstrated by the above data is economically significant in terms of producing high performance hollow fiber membrane devices at increased rates without damage to the fibers.

### EXAMPLE 2 (COMPARATIVE)

Example 1 was repeated utilizing prior art product packages of 400μm nominal i.d. microporous Celgard® hollow polypropylene fibers. Each prior art package consisted of six hollow fibers wound onto a spool in the form of a single random bundle. The winding apparatus used to produce the prior art packages was generally as shown in accompanying Figures 2 and 3 with the principal exceptions being that guide wheel structures each having a V-shaped or U-shaped groove about its periphery were used instead of the guide rolls as shown in accompanying Figure 4 and as replacement for the comb 52 attached to traversing arm 56. The guide wheel structures were typically 3-3/8 inches in diameter and 1/2 to 1 inch wide. The results of this example are shown in Table 2 below:

## TABLE 2

| Run No. | Unwinding Speed (fpm) | Run time (minutes) | Length unwound (feet) |
|---------|-----------------------|--------------------|-----------------------|
| 9 | 20 | 22:40* | 453 |
| 10 | 40 | 7:54* | 316 |
| 11 | 60 | 7:50* | 470 |
| 12 | 80 | 7:12* | 576 |
| 13 | 100 | 6:07* | 612 |
| 14 | 150 | 0:26* | 65 |
| 15 | 200 | 3:01* | 603 |
| 16 | 300 | 0:31* | 195 |

\* Time to fiber breakage

The above data demonstrate the efficacy of the present invention in permitting packages of multiple monofilament fibers to be unwound at high unwinding speeds with individual monofilament fibers being readily separated one from another without damage. The prior art packages, on the other hand, while consisting of multiple monofilament fibers, could not run even at low unwinding speeds without damaging the fibers. When the data of run nos. 1-8 of Example 1 in accordance with this invention and run nos. 9-16 in accordance with the prior art are plotted as the length of fiber unwound before breakage against unwinding speed (see Figure 7), the functional aspects achieved by means of this invention are apparent in that product packages of multiple hollow fiber membranes can now be completely unwound at high rates of speed substantially without fiber breakage while yet permitting separation of the individual hollow fiber membranes.

While the present invention has been herein described in what is presently conceived to be the most preferred and exemplary embodiments thereof, those in this art may recognize that many modifications may be made thereof, which modifications shall be accorded the broadest scope of the appended claims so as to encompass all equivalent methods, apparatus and products.

### Claims

1. In a continuous method of producing a hollow fiber membrane including the steps of (i) melt spinning a hollow nonporous precursor fiber, (ii) subjecting said precursor fiber to sequential steps of cold stretching and hot stretching in the length direction of the fiber, and (iii) winding said cold and hot stretched hollow fiber upon a spool to form a package, the improvement comprising the steps of:

(a) simultaneously subjecting a plurality of said precursor fibers to said sequential steps of cold and hot stretching in the length direction of the fibers;

(b) laterally spatially segregating said plurality of precursor fibers prior to step (a) into at least two groupings, each of which consists of multiple said fibers, and maintaining said fibers in said laterally-spaced groupings during said cold and hot stretching of step (a); and

(c) winding said groupings upon said spool such that said laterally-spaced segregation of said groupings is preserved by causing said groupings of fibers to be traversed from one end of the spool to the other end thereof and by causing each said fiber of said groupings for each successive layer wound upon said spool to be substantially aligned in parallel to those fibers of an immediately preceding layer to thereby minimize fiber-to-fiber interaction, whereby upon unwinding from said package, each fiber is readily separable from the other fibers of its respective grouping without damage thereto.

2. A method as in claim 1 wherein step (c) is practiced by utilizing guide means for guiding said groupings of fibers from said hot stretching step to said winding step, said guide means defining respective cylindrical surfaces for each of said groupings.

3. A method as in claim 2 wherein said cylindrical surfaces are of sufficient axial length to permit each grouping of fibers to be axially slidably displaced therealong responsive to traversal of said groupings between said one and other ends of said spool, such that the fibers of each grouping are maintained in side-by-side uncrossed relationship and such that said parallel alignment of said fibers relative to said immediately preceding layer of fibers is achieved.

4. A method as in claim 1 wherein each said grouping consists of at least two fibers.

5. A method as in claim 1 wherein each said grouping consists of between two to four fibers.

6. A method of forming a package having a plurality of fibers wound into a cylindrically-shaped form, which fibers are capable of readily separating one from another upon being unwound from the package, said method comprising the steps of segregating said plurality of fibers into at least two groupings each of which consists of multiple said fibers in side-by-side uncrossed relationship, and winding said at least two fiber groupings onto a spool, wherein said step of winding includes (a) causing the fiber groupings to be traversed between one and another ends of the spool, (b) maintaining said segregation of said groupings and the side-by-side uncrossed elationship of said fibers in each said grouping during said traversal, (c) causing each said fiber of said groupings for each successive layer wound upon said spool to be substantially aligned in parallel to those fibers of an immediately preceding layer, and (d) permitting each grouping of fiber, responsive to traversal of said groupings between said one and other ends of said spool, to be slidably displaced parallel to the winding axis of the spool along respective smoothly curved surfaces prior to said groupings being wound upon said spool.

7. Method as in claim 6 wherein said fibers are hollow fiber membranes.

8. Method as in claim 7 wherein said fibers are hollow microporous fiber membranes.

9. Apparatus for the continuous simultaneous production of plural hollow fiber membranes and for forming a package said plural fiber membranes, said apparatus comprising:

stretching means for simultaneously sequentially cold and hot stretching plural melt-spun, hollow precursor fibers;

means for spatially segregating said plural precursor fibers into at least two groupings each of which consists of multiple fibers prior to stretching by said stretching means and for maintaining said spatial segregation of said groupings during stretching by said stretching means; and

winding means for winding said groupings upon a spool, said winding means including rotatable spindle means for carrying said spool and for rotating said spool about a winding axis to cause said groupings to be wound upon said spool, traverse means engageable with said groupings of fibers to cause said groupings of fibers to reciprocally traverse a path parallel to said winding axis, and guide means for guiding said groupings of fibers from said stretching means to said traverse means, wherein said guide means defines a smooth curved surface disposed parallel to said winding axis and includes partition means to partition said curved surface into at least two adjacent subsurfaces each of which is in contact with a respective one of said fiber groupings, said guide means for allowing said fiber groupings to be axially slidably displaced along said respective subsurface in response to said traverse means traversing said path thereby to preserve said spatial segregation of said groupings and for causing each fiber of said groupings of fibers to be wound upon said spool such that said fibers in each successive layer of fibers wound upon said spool and aligned substantially in parallel to those fibers of an immediately preceding layer, whereby fiber-to-fiber interactions are minimized such that each fiber is readily separable from the other fibers of its respective grouping upon unwinding from said spool.

10. Apparatus for forming a package having a plurality of fibers so that each fiber is readily separable one from another upon being unwound from said formed package, said apparatus comprising:

winding means including a spindle for carry a spool and for rotating said spool about a winding axis to cause said plural fibers to be wound upon said spool;

traverse means engagable with said plural fibers for reciprocally traversing a path parallel to said winding axis during winding by said winding means so that said plural fibers are wound upon said spool between one and another ends thereof about said winding axis; and

guide means for guiding said plural fibers to said traverse means, said guide means including (a) means defining at least one smoothly curved surface disposed parallel to said winding axis, and (b) partition means for partitioning said smoothly curved surface into at least two subsurfaces and for segregating said plural fibers into at least two fiber groupings each of which consists of multiple said fibers in side-by-side uncrossed relationship, each said fiber grouping being in sliding contact with a respective one of said subsurfaces,

said guide means for allowing said fiber groupings to be axially slidably displaced along said respective subsurface in response to said traverse means traversing said path thereby to preserve said segregation of said groupings when said groupings are wound upon said spool whereby fiber-to-fiber interactions are minimized such that each fiber is readily separable from the other fibers of its respective grouping upon being unwound from said spool.

11. Apparatus as in claim 9 or 10 wherein said guide means includes at least one guide spool having a pair of end flanges, and said partition means includes an intermediate flange, said subsurfaces being smooth cylindrical surfaces defined between said intermediate and said end flanges of said at least one guide spool, said at least one guide spool being rotatably mounted about an axis parallel to said winding axis.

12. Apparatus as in claim 11 wherein plural said guide spools are rotatably mounted at respective positions between said stretching means and said traverse means.

13. Apparatus as in claim 9 or 10 wherein said traverse means includes a comb member which defines open regions each of which respectively receives one of said groupings of fibers for engaging with said groupings and causing said groupings to traverse said path.

14. A package comprising a cylindrical spool, and a plurality of continuous hollow fibers wound upon said spool about the axis of said spool in generally successive winding layers between opposing ends of said spool, each said layer of fibers being comprised of repeating units of several laterally spaced-apart groupings of fibers, wherein each lateral edge portion of said layers adjacent to respective ends of said spool consists of those fibers in side-by-side, uncrossed relationship which form that one grouping of fibers which was nearest to said respective end of said spool during winding.

15. A package as in claim 14 wherein each grouping consists of between two to four said fibers.

16. A package as in claim 14 wherein said hollow fibers are hollow fiber membranes.

17. A package as in claim 14 wherein said hollow fibers are hollow polyolefinic microporous fibers.

18. A package comprising a cylindrical spool and a plurality of continuous hollow fibers wound upon said spool about the spool's axis between one and another ends of the spool in successive winding layers, each layer consisting of repeating units of several laterally spaced-apart groupings of fibers, each said grouping consisting of multiple said fibers in substantially side-by-side uncrossed relationship to one another, wherein upon unwinding from said spool, each fiber is readily separable from the other fibers of said groupings without damage thereto.

19. A package consisting essentially of a plurality of fibers formed according to the method of claim 1 or 6.

20. A package as in claim 14 or 18 wherein each said fiber is a microporous polyolefinic hollow fiber having an average wall thickness in the range of from about 1 to about 75 microns, a coefficient of variation in wall thickness throughout a cross section taken perpendicular to the axis of the fiber of less than about 20%, an average inner diameter in the range of from about 5 to about 1500 microns, a coefficient of variation in inner diameter throughout a cross-section taken perpendicular to the axis of the fiber of less than about 8%, and a substantially uniform porosity across the circumference of the fiber as measured by the average ratio of the maximum pore density to the minimum pore density around the circumference of the fiber of less than about 3:1.

Fig. 1

Fig. 3

Fig. 2

Fig. 5ₐ

Fig. 5ᵦ

Fig. 5꜀

Fig. 4

Fig. 6

Fig. 7